**Europäisches Patentamt**

**European Patent Office**

**Office européen des brevets**

(11) Veröffentlichungsnummer: **0 495 133 A1**

# EUROPÄISCHE PATENTANMELDUNG

(21) Anmeldenummer: **91100349.9**

(22) Anmeldetag: **12.01.91**

(51) Int. Cl.5: **B01F 15/00**, G01N 27/20

(43) Veröffentlichungstag der Anmeldung:
**22.07.92 Patentblatt 92/30**

(84) Benannte Vertragsstaaten:
**CH DE FR GB IT LI**

(71) Anmelder: **Pfaudler Werke GmbH**
**Pfaudlerstrasse Postfach 1780**
**W-6830 Schwetzingen(DE)**

(72) Erfinder: **Schneider, Walter**
**Königsbergerstrasse 8**
**W-6834 Ketsch(DE)**
Erfinder: **Swameye, Kapil Deo**

**Im Steuergewann 1**
**W-6836 Oftersheim(DE)**
Erfinder: **Wolf, Siegfried**
**Höhenstrasse 6**
**W-6906 Leimen-Gauangelloch(DE)**
Erfinder: **Amorese, Franklyn J.**
**39 Peck Road, Hilton**
**New York 14468(US)**

(74) Vertreter: **Endlich, Fritz, Dipl.-Phys. et al**
**Patentanwalt Blumenstrasse 14 Postfach 13 26**
**W-8034 Germering(DE)**

(54) **Korrosionsgeschützter Rührer mit einer abnehmbaren Rührflügeleinheit.**

(57) Es wird ein korrosionsgeschützter Rührer mit einer abnehmbaren Rührflügeleinheit beschrieben, der aus einem metallischen Rührerschaft mit einer korrosionsbeständigen Emaillierung auf dessen Außenfläche besteht, wobei mindestens eine Rührflügeleinheit mit einer korrosionsbeständigen Emaillierung vorgesehen ist, und wobei im montierten Zustand des Rührers eine Steckverbindung in einem Paßsitzbereich 7 mit komplementären Paßsitzflächen von aneinander anliegenden, bearbeiteten Oberflächen der Beschichtungen vorgesehen ist. In dem Paßsitzbereich 7 ist in jeder der beiden Paßsitzflächen ein zentraler Teilbereich aus elektrisch leitendem Material ausgebildet, wovon der eine Teilbereich 3 mit dem metallischen Körper des Rührerschafts 1 und der andere Teilbereich 6 mit dem metallischen Körper der Rührflügeleinheit elektrisch leitend verbunden ist. Im montierten Zustand sind die Oberflächen der beiden Teilbereiche sich mindestens teilweise überdeckend derart angeordnet, daß eine elektrisch leitende Verbindung zwischen dem metallischen Körper des Rührerschafts und dem metallischen Körper der Rührflügeleinheit vorhanden ist. Der Zusammenbau der Rührer erfolgt vorzugsweise mit Hilfe einer Schrumpftechnik durch Unterkühlung des Rührerschafts mit von innen zugeführtem flüssigen Stickstoff.

FIG.1

Die Erfindung betrifft einen insbesondere emaillierten Rührer mit einr abnehmbaren Rührflügeleinheit entsprechend dem Oberbegriff des Patentanspruchs 1.

Derartige emaillierte Rührer sind aus DE 29 51 937 C2 und aus DE 30 07 718 Al bekannt. Diese Rührer können mit Hilfe einer sogenannten Cryo-Lock-Verbindungstechnik (Schrumpftechnik) hergestellt werden (US-PS 4 221 488). Bei dieser Technik handelt es sich um eine Schrumpfverbindung eines voll emaillierten Rührerschafts mit der ebenfalls voll emaillierten Nabe der Rührflügel. Durch Unterkühlung des Rührerschaftendes mit von innen zugeführtem flüssigem Stickstoff wird die Schrumpfung des Schaftes erreicht. Diese Schrumpfung ermöglicht das problemlose Aufschieben der Rührernabe. Nach Erwärmen der Verbindung auf Raumtemperatur wird eine feste Verbindung zwischen den bearbeiteten Emailoberflächen erreicht. Geeignete Toleranzen und Oberflächeneigenschaften des verbindenden Paßsitzbereiches werden durch Honen des Schaftendes und der Rührernabe erzielt.

Mit dieser Technik können Rührflügeleinheiten mit einer einzigen Nabe und mehreren Rührflügeln hergestellt werden, welche durch das Mannloch eines Behälters eingeführt werden können, dessen größte Öffnung das Mannloch ist. Aufgrund unterschiedlicher Formen der Rührflügel und bei Verwendung von geteilten Naben lassen sich sehr unterschiedliche Rührerformen für die verschiedensten Rühraufgaben konzipieren.

Es sind auch andere Verfahren zur Herstellung derartiger Rührer mit einer oder mehreren abnehmbaren Rührflügeleinheiten möglich, wobei die Rührflügeleinheiten beispielsweise aus einem schaufelförmigen Rührflügel und einem Arm bestehen, der sich konstant verjüngt und in eine komplementär ausgebildete Wellenbohrung durch eine Montagekraft teleskopartig eingeschoben werden kann, so daß eine Relativbewegung zu einem Preßsitz zwischen den beschichteten Oberflächen der Welle und dem Arm der Rührflügeleinheit führt (EP-B1-0 145 370).

Einer Verwendung derartiger Rührer für eine Vielfalt unterschiedlicher Produktionen und Rühraufgaben ist aber insoweit eine gewisse Grenze gesetzt, als mit Hilfe von bekannten Prüfverfahren eine kontinuierliche Prüfung während der Produktion nicht möglich ist, um Emailschäden an der bzw. den Rührflügeleinheiten erkennen zu können. Durch nicht frühzeitig erkannte Emailschäden können nicht nur beträchtliche Reparaturkosten und ein längerer Produktionsausfall, sondern auch sehr unerwünschte metallische Verunreinigungen des Produkts verursacht werden. Eine weitere Schwierigkeit besteht darin, daß bei Produktionsumstellungen oder bei Verfahrensoptimierungen geteilte emaillierte Rührer der genannten Art nicht ohne weiteres benutzt werden können, wenn eine für die Betriebssicherheit der emaillierten Apparate sehr wesentliche laufende Überwachung mit dazu geeigneten Verfahren (DE 12 93 478, DE 22 59 492 C3 und DE 24 15 317 C2) erforderlich werden kann. Die mit derartigen Verfahren mögliche kontinuierliche Prüfung während der Produktion setzt voraus, daß die Stahlteile aller zu prüfenden emaillierten Teile elektrisch leitend miteinander in Verbindung stehen.

Es ist deshalb Aufgabe der Erfindung, korrosionsgeschützte Rührer der beschriebenen Art, die mindestens eine abnehmbare Rührflügeleinheit aufweisen, derart zu verbessern, daß mit Hilfe bekannter Prüfverfahren der genannten Art eine kontinuierliche Prüfung während der Produktion durchgeführt werden kann.

Diese Aufgabe wird bei geteilten Rührern der beschriebenen Art erfindungsgemäß durch den Gegenstand des Patentanspruchs 1 gelöst. Vorteilhafte Weiterbildungen der Erfindung sind Gegenstand der Unteransprüche.

Da bei einem derartigen geteilten Rührer alle emaillierten Stahlteile elektrisch leitend miteinander verbunden werden können, können die erwähnten bekannten Verfahren für eine laufende Überwachung während des Betriebs ohne weiteres durchgeführt werden. Bei einer derartigen Konstruktion besteht ferner die Möglichkeit, bereits bei der Herstellung der geteilten emaillierten Rührer zu prüfen, ob in dem emaillierten Paßsitzbereich, in dem eine zusätzliche Dichtung nicht vorgesehen ist, eine ausreichende Abdichtung vorhanden ist. Derartige Prüfungen können mit üblichen Hochspannungs-Prüfgeräten normalerweise nicht durchgeführt werden.

Anhand der Zeichnung soll die Erfindung beispielsweise näher erläutert werden. Es zeigen:

Fig. 1 eine Schnittansicht eines ersten Ausführungsbeispiels gemäß der Erfindung mit zwei ringförmigen Auftragschweißungen,

Fig. 2 eine Fig. 1 entsprechende Darstellung eines Ausführungsbeispiels gemäß der Erfindung mit zwei ringförmigen Zonen aus elektrisch leitfähigem Email,

Fig. 3 einen Teilschnitt durch den Rührerschaft bzw. die Nabe bei einem dritten Ausführungsbeispiel gemäß der Erfindung; und

Fig. 4 einen Teilschnitt durch den Rührerschaft bei einem vierten Ausführungsbeispiel gemäß der Erfindung.

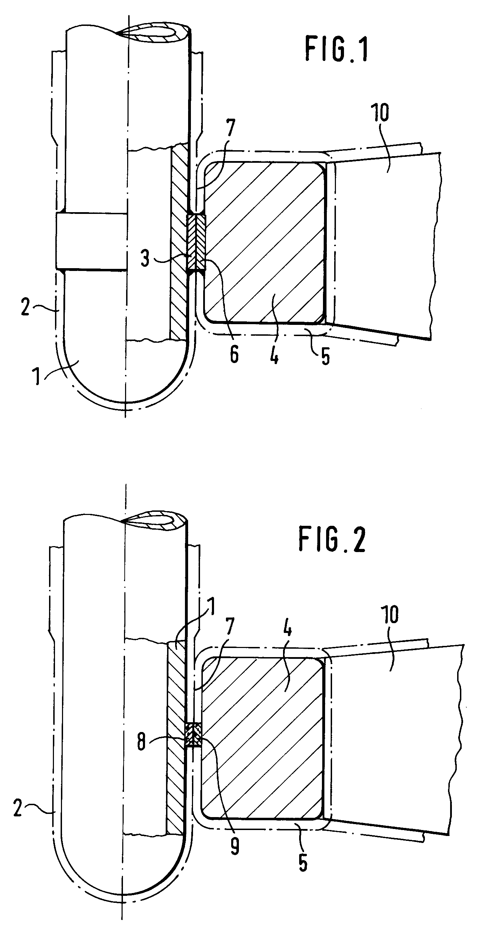

Bei dem in Fig. 1 dargestellten Ausführungsbeispiel ist ein Rührerschaft 1 mit einem geschlossenen Ende vorgesehen. Auf der Außenfläche des Rührerschafts 1 und über dem geschlossenen Ende ist eine korrosionsbeständige Emaillierung 2 vorgesehen, die in üblicher Weise aus mehreren Emailschichten zusammengesetzt ist.

Der Rührerschaft 1 ist von der Nabe 4 einer eine Bohrung aufweisenden Rührflügeleinheit umgeben, an der mindestens ein Rührflügel 10 vorgesehen ist, der entsprechend der Rühraufgabe des Rührersystems ausgebildet ist, beispielsweise wie der aus der US-PS 4 221 488 bekannte Impellerrührer. Auf der Oberfläche der Rührflügeleinheit und entlang der den Innendurchmesser der Bohrung begrenzenden Oberfläche ist ebenfalls eine korrosionsbeständige Emaillierung vorgesehen.

Gemäß der Erfindung ist bei diesem Ausführungsbeispiel eine Auftragschweißung 3 auf dem Rührerschaft vorgesehen, welche den Rührerschaft ringförmig umgibt. Die Auftragschweißung besteht aus einem Material, das emaillierfähig und vorzugsweise im Vergleich zu der Emaillierung so weitgehend wie möglich korrosionsbeständig ist. Geeignete Materialien dieser Art sind beispielsweise Hastelloy oder Inconel. Ferner ist an dem metallischen Körper der Nabe 4 ebenfalls eine Auftragschweißung 6 aufgebracht, die in einem zentralen Teilbereich der Bohrung ausgebildet ist. Die ringförmigen Auftragschweißungen 3 und 6 an dem Rührerschaft bzw. in der Bohrung der Nabe 4 der Rührflügeleinheit besitzen vorzugsweise die gleiche Breite. Im montierten Zustand des Rührers können die beiden Oberflächen der beiden Teilbereiche sich mindestens teilweise überdeckend derart angeordnet sein, daß eine elektrisch gut leitende Verbindung zwischen dem metallischen Körper des Rührerschafts 1 und dem metallischen Körper der Nabe 4 der Rührflügeleinheit vorhanden ist. Um einen geeigneten Paßsitzbereich 7 zu bilden, sind die im montierten Zustand des Rührers aneinander anliegenden Oberflächen der beiden Emaillierungen 2 und 5 und der beiden Auftragschweißungen 3 und 6 beispielsweise durch Honen bearbeitet.

Zur Herstellung eines derartigen Rührers kann zunächst die Auftragschweißung 3 entlang dem Umfang des metallischen Körpers des Rührerschafts 1 mit ausreichender Dicke aufgetragen werden, ebenso die Auftragschweißung 6 entlang dem zentralen Bereich des Innenumfangs der Nabe 4 der Rührflügeleinheit. Nach dem Aufbringen der beiden Auftragschweißungen 3,6 wird deren Oberflächeabgedreht, und die Emaillierungen 2,5 werden in üblicher Weise schichtweise aufgetragen und eingebrannt. Dann werden die Emailoberflächen im Paßsitzbereich 7 auf Maß geschliffen, so daß nach der Bearbeitung die Oberflächen der Emaillierungen und der Auftragschweißung im Paßsitzbereich 7 bündig sind. Danach kann der Zusammenbau des Rührers mit Hilfe des beschriebenen bekannten Cryo-Lock-Verfahrens derart erfolgen, daß die Oberflächen der beiden Auftragschweißungen 3,6 elektrisch leitend miteinander verbunden sind.

Bei dem in Fig. 2 dargestellten Ausführungsbeispiel sind einander entsprechende Teile mit denselben Bezugzeichen versehen. Anstelle der Auftragschweißungen 3,6 in Fig. 1 sind jedoch in den beiden angrenzend aneinander vorgesehenen Teilbereichen ringförmige Emailschichten 8 bzw. 9 aus elektrisch leitfähigem Email in dem zentralen Teilbereich des Paßsitzbereichs 7 vorgesehen. Die elektrische Leitfähigkeit des Emails für die beiden Teilbereiche 8,9 kann dadurch hergestellt werden, daß der Fritte elektrisch leitfähige Partikel zugesetzt werden, welche Partikel beispielsweise aus Silber bestehen können. Die bearbeiteten Oberflächen des Paßsitzbereichs 7 mit den beiden ringförmigen zentralen Teilbereichen 8 und 9 stehen nach dem Aufschrumpfen in Kontakt, so daß damit die elektrisch leitende Verbindung hergestellt ist.

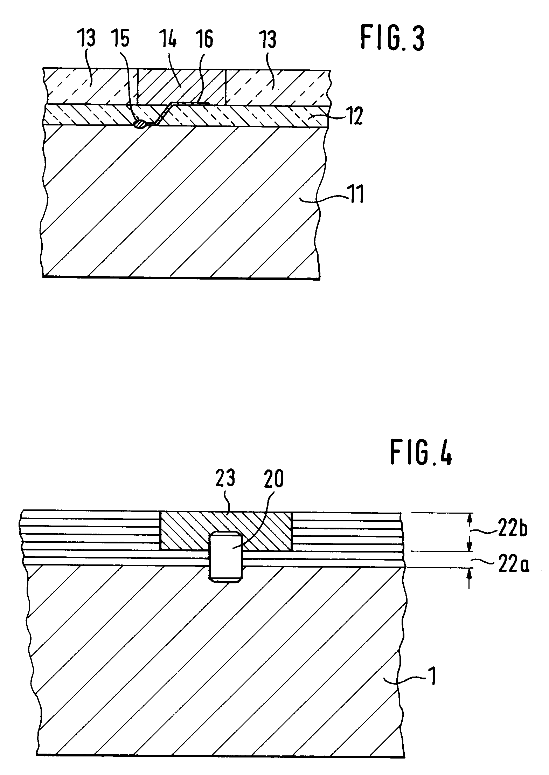

Bei dem Ausführungsbeispiel in Fig. 3 ist nur ein Stahlkörper 11 dargestellt, welches der Stahlkörper des Rührerschafts 1 oder der Nabe 4 in Fig. 1 und 2 sein kann, da die grundsätzliche Konstruktion der die elektrisch leitende Verbindung herstellenden Mittel an beiden Stahlkörpern gleich sein kann bei dem Ausführungsbeispiel in Fig. 3 ist eine Grundemailschicht 12 vorgesehen, die aus einem normalen, also elektrisch isolierendem Email besteht. Ferner ist eine Deckemailschicht 13 aus isolierendem Email vorgesehen. Bei diesem Ausführungsbeispiel ist ferner ein ringförmiger Teilbereich 14 aus elektrisch leitfähigem Deckemail vorgesehen. Die elektrische Verbindung zwischen dem Stahlkörper 11 und dem ringförmigen Teilbereich 14 aus elektrisch leitfähigem Deckemail erfolgt mit Hilfe eines elektrisch leitfähigen Bands 16, das beispielsweise aus Platin hergestellt ist. Das eine Ende dieses Bands 16 wird durch eine Punktschweißung 15 mit dem Stahlkörper 11 verbunden und das Band 16 ist derartig in die Grundemailschicht 12 einemailliert und durch diese hindurchgeführt, daß es nach dem Auftragen des Grundemails die Freilegung des Bandendes ermöglicht, bevor das elektrisch leitfähige Deckemail darüber aufgetragen und eingebrannt wird.

Fig. 4 zeigt ein weiteres Ausführungsbeispiel, bei dem an dem Stahlkörper des Rührerschafts 1 in Fig. 1 oder 2 ein Zapfen oder Stift 20 durch Hartlöten, mittels eines Preßsitzes oder durch eine andere an sich bekannte Befestigungstechnik mit einer elektrisch leitenden Verbindung befestigt ist. Der Verbindungskörper 20 kann auch durch Auftragschweißung vorgesehen werden. Das Material des zapfenförmigen Verbindungskörpers ist vorzugsweise Platin, obwohl auch andere emaillierfähige und korrosionsbeständige Metalle wie Inconel verwendbar sind. Nach dem Befestigen des Verbindungskörpers wird aus mehreren Schichten bestehendes Grundemail 22a aufgetragen und eingebrannt, wonach mehrere Schichten aus Deckemail 22b aufgetragen und eingebrannt werden. Danach wird die Oberfläche des Deckemails 22b und die Oberfläche des zapfenförmigen Verbindungskörpers geschliffen und durch Honen auf die erforderliche Abmessung gebracht. Nach der Fertigstellung fluchten die Oberflächen des zapfenförmigen Verbindungskörpers 20 und der diesen umgebenden Deckemailschicht.

Wie in Fig. 4 angedeutet ist, kann der zapfenförmige Verbindungskörper 20 nach dem Auftragen einer Grundemailschicht mit einer Platte 23 aus Platin oder dergleichen Material elektrisch leitend verbunden werden, bevor die Deckemailschicht 22b eingebrannt wird, so daß nach dem Einbrennen durch Schleifen und Honen die fluchtende Ausbildung des Paßsitzbereichs 7 erfolgen kann. Anstelle einer metallischen Platte 23 kann auch elektrisch leitendes Email wie bei dem Ausführungsbeispiel in Fig. 3 Verwendung finden.

In der Emaillierung entlang der Innenfläche der Bohrung der Nabe 4 in Fig. 1 und 2 kann auch ein Band oder ein Fleck aus elektrisch leitendem Email vorgesehen werden, das mit dem Metallkörper der Nabe wie in Fig. 2 direkt oder wie in Fig. 3 und 4 indirekt über einen metallischen Leiter in Verbindung steht. Dieser Fleck aus elektrisch leitendem Material muß nur so groß sein, daß gewährleistet ist, daß der zapfenförmige Verbindungskörper aus Platin oder dergleichen Material so ausgerichtet werden kann, daß ein elektrischer Kontakt und damit eine elektrisch leitende Verbindung mit dem Metallkörper des Rührerschafts erfolgt.

Wenn ein von der Außenseite der Nabe her zugänglicher, mit dem Metallkörper der Nabe in leitender Verbindung stehender Stopfen aus Platin oder dergleichen korrosionsbeständigem Material vorhanden ist oder vorgesehen wird, kann durch Anlegen einer Spannung eine Prüfung erfolgen, ob der Metallkörper der Nabe mit dem Metallkörper des Rührerschafts in elektrisch leitender Verbindung steht.

Es ist ferner zweckmäßig, die im Paßsitzbereich 7 liegenden Oberflächen der elektrisch leitenden Bereiche zumindest dann mit einer möglichst kleinen Größe der Oberfläche auszubilden, wenn das benutzte elektrisch leitende Material keine so große Korrosionsbeständigkeit wie die Emailoberfläche aufweist , weil im allgemeinen durch die Schrumpftechnik eine hermetische Abdichtung zwischen der Oberfläche des Rührerschafts und der Innenfläche der Nabe nicht sicher erreicht werden kann.

Bei den beschriebenen Ausführungsbeispielen können die beiden elektrisch leitenden Teilbereiche an dem Rührerschaft und an der Nabe der Rührflügeleinheit im Prinzip gleich ausgebildet sein. Die beschriebenen Ausführungsbeispiele können jedoch auch in anderer Weise miteinander kombiniert werden, so daß es möglich ist, die jeweils hinsichtlich Fertigungsmöglichkeiten und Kosten optimale Ausführungsform an dem Rührerschaft bzw. der Nabe der Rührflügeleinheit zu wählen.

**Patentansprüche**

1. Korrosionsgeschützter Rührer mit einer abnehmbaren Rührflügeleinheit, bestehend aus:

    a) einem metallischen Rührerschaft (1) mit einer korrosionsbeständigen Emaillierung oder dergleichen elektrisch nicht leitenden korrosionsbeständigen Beschichtung auf dessen Außenfläche,

    b) einer mindestens einen Rührflügel (10) aufweisenden Rührflügeleinheit mit einer korrosionsbeständigen Emaillierung oder dergleichen elektrisch nicht leitenden korrosionsbeständigen Beschichtung auf deren Oberfläche, wobei

    c) im montierten Zustand des Rührers eine Steckverbindung in einem Paßsitzbereich (7) mit komplementären Paßsitzflächen von aneinander anliegenden, bearbeiteten Oberflächen der Beschichtungen vorgesehen ist, **dadurch gekennzeichnet**, daß

    d) in dem Paßsitzbereich (7) in jeder der beiden Paßsitzflächen ein zentraler Teilbereich aus elektrisch leitendem Material ausgebildet ist, daß

    e) der eine Teilbereich (3;8;14;23) mit dem metallischen Körper des Rührerschafts (1) und der andere Teilbereich (6;9;14;23) mit dem metallischen Körper der Rührflügeleinheit elektrisch leitend verbunden ist, und daß

    f) im montierten Zustand des Rührers die Oberflächen der beiden Teilbereiche sich mindestens teilweise überdeckend derart angeordnet sind, daß eine elektrisch leitende Verbindung zwischen dem metallischen Körper des Rührerschafts (1) und dem metallischen Körper der Rührflügeleinheit vorhanden ist.

2. Rührer nach Anspruch 1, **dadurch gekennzeichnet**, daß mindestens einer der beiden Teilbereiche ringförmig ausgebildet ist.

3. Rührer nach Anspruch 1 oder 2, **dadurch gekennzeichnet**, daß einer der beiden Teilbereiche band- oder fleckenförmig ausgebildet ist.

4. Rührer nach einem der vorhergehenden Ansprüche, **dadurch gekennzeichnet**, daß mindestens einer der beiden Teilbereiche durch eine Auftragschweißung gebildet ist.

5. Rührer nach einem der vorhergehenden Ansprüche **dadurch gekennzeichnet,** daß mindestens einer der beiden Teilbereiche aus elektrisch leitfähigem Email besteht.

6. Rührer nach einem der vorhergehenden Ansprüche, **dadurch gekennzeichnet**, daß mindestens einer der beiden Teilbereiche mit dem betreffenden metallischen Körper (11) über einen zapfenförmigen metallischen Verbindungskörper (20) in elektrisch leitender Verbindung steht.

7. Rührer nach Anspruch 6, **dadurch gekennzeichnet**, daß über dem Verbindungskörper (20) eine Schicht aus elektrisch leitendem Email vorgesehen ist.

8. Rührer nach Anspruch 6, **dadurch gekennzeichnet,** daß über dem Verbindungskörper (20) eine metallische Platte (23) vorgesehen ist.

9. Rührer nach Anspruch 2, **dadurch gekennzeichnet**, daß der ringförmige Teilbereich eine über einer elektrisch isolierenden Grundemailschicht (12) vorgesehene Deckemailschicht (14) aus elektrisch leitendem Email aufweist, und daß die elektrisch leitende Deckemailschicht (14) über ein durch die isolierende Grundemailschicht hindurchgeführtes metallisches Band (16) in elektrisch leitender Verbindung mit dem betreffenden metallischen Körper (11) steht.

10. Rührer nach einem der Ansprüche 1 bis 4, **dadurch gekennzeichnet,** daß zumindest die Oberfläche der beiden Teilbereiche durch ein korrosionsbeständiges Metall wie Tantal, Inconel oder Hastelloy gebildet ist.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 811 339 (OSBORNE)<br>* Patentanspruch 1; Figuren *<br>--- | 1 | B 01 F 15/00<br>G 01 N 27/20 |
| A | EP-A-0 393 516 (TYCON)<br>--- | | |
| A | US-A-3 220 804 (BACHMANN)<br>--- | | |
| A | DE-A-2 103 621 (SCHNEIDER)<br>----- | | |

**RECHERCHIERTE SACHGEBIETE (Int. Cl.5)**

B 01 F
G 01 F

Der vorliegende Recherchenbericht wurde für alle Patentansprüche erstellt

| Recherchenort | Abschlußdatum der Recherche | Prüfer |
|---|---|---|
| DEN HAAG | 23-08-1991 | PEETERS S. |